(19) Europäisches Patentamt
European Patent Office
Office européen des brevets

(11) **EP 3 891 859 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **21700192.4**

(22) Anmeldetag: **08.01.2021**

(51) Internationale Patentklassifikation (IPC):
*G06Q 30/02* (2023.01)   *H02J 3/00* (2006.01)
*G06Q 50/06* (2012.01)

(52) Gemeinsame Patentklassifikation (CPC):
**H02J 3/008; G06Q 30/0206; G06Q 50/06;**
**H02J 3/004;** H02J 3/003; Y02B 70/3225;
Y02P 80/10; Y02P 80/20; Y04S 10/50;
Y04S 20/222; Y04S 50/14

(86) Internationale Anmeldenummer:
**PCT/EP2021/050212**

(87) Internationale Veröffentlichungsnummer:
**WO 2021/140168 (15.07.2021 Gazette 2021/28)**

(54) **VERFAHREN UND SYSTEM ZUM STEUERN EINER ELEKTRISCHEN ANLAGE IN VERBINDUNG MIT EINEM STROMHANDELSGESCHÄFT**

METHOD AND SYSTEM FOR CONTROLLING AN ELECTRICAL INSTALLATION

PROCÉDÉ ET SYSTÈME DE COMMANDE D'UNE INSTALLATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2020 DE 102020100467**

(43) Veröffentlichungstag der Anmeldung:
**13.10.2021 Patentblatt 2021/41**

(73) Patentinhaber: **ES · FOR · IN SE**
**45136 Essen (DE)**

(72) Erfinder:
• **HÖVELHAUS, Christian**
  **45136 Essen Nordrhein-Westfalen (DE)**
• **THIELKE, Philipp**
  **45136 Essen Nordrhein-Westfalen (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
**DE-A1-102016 118 115     US-A1- 2019 252 880**
**US-A1- 2019 369 572**

**Beschreibung**

Die Erfindung betrifft ein Verfahren und ein System zum Steuern einer elektrischen Anlage, die eine elektrische Energiequelle und/oder eine elektrische Energiesenke umfasst und an ein Stromnetz gekoppelt ist.

Bekannt, beispielsweise aus der DE 10 2016 118 115 A1, ist die sogenannte Laststeuerung, die die Steuerung der Nachfrage nach netzgebundenen Dienstleistungen bei Abnehmern in Industrie, Gewerbe und Privathaushalten bezeichnet. Derartige Dienstleistungen beziehen sich beispielsweise auf den Stromverbrauch oder Verbrauch von elektrischer Energie, die über ein Stromnetz an eine elektrische Anlage geliefert wird. Durch die Laststeuerung kommt es in der Regel zu einer Verringerung der Nachfrage, ohne die Stromerzeugung erhöhen zu müssen. Bei Engpässen in der Stromerzeugung, beispielsweise bei Ausfall eines großen Kraftwerks, oder bei großem Bedarf an elektrischer Energie oder bei Störungen des Netzbetriebs kann im Stromnetz eine Unterfrequenz und/oder eine Unterspannung entstehen. Dann können zum Stabilisieren der Netzfrequenz und/oder der Netzspannung an das Stromnetz angeschlossene elektrische Energiesenken, wie beispielsweise stromverbrauchende Geräte, durch Fernsteuerung abgeschaltet und wieder zugeschaltet werden. Ein derartiges Abschalten wird auch als Lastabwurf bezeichnet. Industrielle Verbraucher, wie beispielsweise Aluminiumhütten, oder Wärmepumpenheizungen in privaten Haushalten können eine gewisse Zeit ausgeschaltet werden, ohne den Arbeitsprozess zu beeinträchtigen. In solchen Fällen wird vorher per Vertrag geregelt, wie lange und welche Geräte abgeschaltet werden dürfen.

Bekannt, beispielsweise aus der US 2019/0252880 A1, ist außerdem die Strombeschaffung an einem Day-Ahead-Markt. Dies bedeutet, dass ein Stromkunde, wie beispielsweise ein industrieller Großverbraucher, täglich für den Folgetag Prognosen seines Strombedarfs in einem vorbestimmten Zeitraster erstellt und an einer Strombörse, wie beispielsweise der Computerbörse EPEX SPOT oder EEX, entsprechende Stromhandelsgeschäfte abschließt. Das Zeitraster besteht üblicherweise aus aufeinanderfolgenden Zeitspannen von jeweils 15 Minuten, und die Stromhandelsgeschäfte sind dann sogenannte 15-Minuten-Kontrakte. Falls dann an dem Folgetag der tatsächliche Stromverbrauch in einer bestimmten Zeitspanne den an dem Vortag prognostizierten Strombedarf überschreitet, so wird diese Abweichung kurzfristig durch die sogenannte Regelenergie auffangen. Diese Regelenergie wird von dem Übertragungsnetzbetreiber des jeweiligen Stromnetzes physisch bereitgestellt und anschließend dem Stromkunden mit Hilfe eines bilanziellen Instruments, das als Ausgleichsenergie bezeichnet wird, in Rechnung gestellt. Der Preis dieser Ausgleichsenergie wird erst nachträglich festgelegt und ist mit hohen Risiken behaftet.

Bekannt, beispielsweise aus der US 2019/0252880 A1 oder der US 2019/0369572 A1, ist zudem die Strombeschaffung an einem Intraday-Markt. Dies bedeutet, dass der Stromkunde an einer Strombörse, wie beispielsweise EPEX SPOT, entsprechende Stromhandelsgeschäfte kontinuierlich abschließt. Dies bedeutet, dass die Gebote der Handelsteilnehmer laufend in ein Orderbuch eingegeben werden, und sobald zwei Gebote kompatibel sind, werden sie ausgeführt. Diese Stromhandelsgeschäfte können sehr kurzfristig abgeschlossen werden, so kann beispielsweise an EPEX SPOT innerhalb der deutschen Regelzonen bis 5 Minuten vor der physischen Lieferung gehandelt werden.

Es ist Aufgabe der Erfindung, den Betrieb einer elektrischen Anlage zu verbessern, die eine elektrische Energiequelle und/oder eine elektrische Energiesenke umfasst und an ein Stromnetz gekoppelt ist.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Die Erfindung schlägt gemäß einem ersten Aspekt ein Verfahren zum Steuern einer elektrischen Anlage vor, wobei die Anlage eine elektrische Energiequelle und/oder eine elektrische Energiesenke umfasst und an ein Stromnetz gekoppelt ist, wobei

- eine zukünftige Zeitspanne mit einem Startzeitpunkt und einer Dauer vorgegeben wird;
- für die Zeitspanne eine Aufwärtsflexibilität festgelegt wird, wobei die Aufwärtsflexibilität einen prognostizierten maximalen Einspeisungsleistungsanstieg und/oder einen prognostizierten maximalen Ausspeisungsleistungsabfall umfasst;
- für die Zeitspanne eine Abwärtsflexibilität festgelegt wird, wobei die Abwärtsflexibilität einen prognostizierten maximalen Ausspeisungsleistungsanstieg und/oder einen prognostizierten maximalen Einspeisungsleistungsabfall umfasst;
- für die Zeitspanne ein Verkaufsschwellenpreis festgelegt wird;
- für die Zeitspanne ein Einkaufsschwellenpreis festgelegt wird;
- für die Zeitspanne ein Stromhandelsgeschäft abgeschlossen wird, wobei das Stromhandelsgeschäft einen Basiswert, eine Basismenge, einen Basispreis, einen Termin, an dem oder bis zu dem das Stromhandelsgeschäft ausgeübt werden muss, und die Pflicht zu einer physischen Erfüllung während dieser Zeitspanne umfasst;
- der Basiswert eine positive oder negative Abrufleistung umfasst;
- der Termin der Startzeitpunkt ist;
- die physische Erfüllung umfasst, dass der Basiswert in Höhe der Basismenge geliefert wird;
- im Fall der positiven Abrufleistung

$$ALp \leq Fo \text{ und } BPp \geq Pv$$

gilt, worin ALp die Basismenge an positiver Abrufleistung ist, Fo die Aufwärtsflexibilität ist, BPp der Basispreis der positiven Abrufleistung ist, und Pv der Verkaufsschwellenpreis ist;

- im Fall der negativen Abrufleistung

$$ALn \leq Fu \text{ und } BPn \leq Pe$$

gilt, worin ALn die Basismenge an negativer Abrufleistung ist, Fu die Abwärtsflexibilität ist, BPn der Basispreis der negativen Abrufleistung ist, und Pe der Einkaufsschwellenpreis ist;

- an dem oder bis zu dem Termin die Anlage derart angesteuert wird, dass die Anlage während der Zeitspanne den Basiswert in Höhe der Basismenge liefert.

Die Erfindung schlägt gemäß einem zweiten Aspekt ein System zum Steuern einer elektrischen Anlage vor, wobei die Anlage eine elektrische Energiequelle und/oder eine elektrische Energiesenke umfasst und an ein Stromnetz gekoppelt ist, wobei das System an die Anlage gekoppelt werden kann oder gekoppelt ist und/oder in Wirkverbindung mit der Anlage stehen kann oder steht und derart ausgebildet ist, dass das System eines der vorgeschlagenen Verfahren ausführen kann oder ausführt.

Die Erfindung ermöglicht einen besseren und wirtschaftlicheren Betrieb der Anlage, einen größeren Wirkungsgrad der Anlage und eine Verringerung der Risiken, die mit der Beschaffung des Stroms verbunden sind, der für den Betrieb der Anlage benötigt wird.

Das Stromnetz ist beispielsweise ein öffentliches Stromnetz.

Die Dauer der zukünftigen Zeitspanne kann nach Bedarf beliebig gewählt werden und beträgt beispielsweise 5 Minuten oder 6 Minuten oder 10 Minuten oder 15 Minuten oder 20 Minuten oder 30 Minuten oder 60 Minuten. Der Startzeitpunkt der zukünftigen Zeitspanne kann nach Bedarf beliebig gewählt werden und beträgt beispielsweise 5 Minuten ab jetzt oder 15 Minuten ab jetzt oder 30 Minuten ab jetzt oder 60 Minuten ab jetzt oder 24 Stunden ab jetzt.

Das Festlegen einer Aufwärtsflexibilität, das Festlegen einer Abwärtsflexibilität, das Festlegen eines Verkaufsschwellenpreises, das Festlegen eines Einkaufsschwellenpreises und das Abschließen eines Stromhandelsgeschäfts erfolgen vor dem Startzeitpunkt.

Die Aufwärtsflexibilität betrifft in Hinblick auf den Stromhandel aus Sicht der Anlage die Richtung "Verkauf", da die Aufwärtsflexibilität die Möglichkeit beschreibt, dass die Anlage mehr Leistung als ursprünglich geplant in das Stromnetz einspeisen kann und/oder dass die Anlage weniger Leistung als ursprünglich geplant aus dem Stromnetz ausspeisen - oder mit anderen Worten: das Stromnetz weniger Leistung als ursprünglich geplant in die Anlage einspeisen - kann. Die Abwärtsflexibilität betrifft in Hinblick auf den Stromhandel aus Sicht der Anlage die Richtung "Einkauf", da die Abwärtsflexibilität die Möglichkeit beschreibt, dass die Anlage weniger Leistung als ursprünglich geplant in das Stromnetz einspeisen kann und/oder dass die Anlage mehr Leistung als ursprünglich geplant aus dem Stromnetz ausspeisen - oder mit anderen Worten: das Stromnetz mehr Leistung als ursprünglich geplant in die Anlage einspeisen - kann. Diese Flexibilitäten sind Leistungen und haben beispielsweise die Ein"eit MW. Die durch die Anlage in das Stromnetz eingespeiste Leistung wird auch als "Einspeisungsleistung" bezeichnet, und die durch die Anlage aus dem Stromnetz ausgespeiste - und somit durch das Stromnetz in die Anlage eingespeiste - Leistung wird auch als "Ausspeisungsleistung" bezeichnet.

Zum besseren Verständnis dienen folgende Beispiele, in denen die Dauer 15 Minuten, also 0,25 h beträgt und der Startzeitpunkt 24 Stunden ab jetzt beträgt:

Beispiel 1: Die Anlage umfasst eine Brennstoffzelle, die nur Einspeisungsleistung abgeben kann. Die Prognose sieht für die Zeitspanne vor, dass die Brennstoffzelle während der Dauer zwar eine geplante Einspeisungsleistung E0 in Höhe von 0,8 kW, entsprechend elektrischer Energie in Höhe von 0,2 kWh = 0,8 kW$\times$0,25 h, abgeben soll, aber ihre Einspeisungsleistung bis auf einen maximalen Wert E2 von 2 kW, entsprechend elektrischer Energie in Höhe von 0,5 kWh = 2 kW$\times$0,25 h, anheben und bis auf einen minimalen Wert E1 von 0,2 kW, entsprechend elektrischer Energie in Höhe von 0,05 kWh = 0,2 kW$\times$0,25 h, absenken kann. Aus diesen Daten wird ein maximaler Einspeisungsleistungsanstieg gemäß Eo = E2-E0 in Höhe von 1,2 kW = 2 kW-0,8 kW, entsprechend elektrischer Energie in Höhe von 0,3 kWh = 1,2 kW$\times$0,25 h, und ein maximaler Einspeisungsleistungsabfall gemäß Eu = E0-E1 in Höhe von 0,6 kW = 0,8 kW-0,2 kW, entsprechend elektrischer Energie in Höhe von 0,15 kWh = 0,6 kW$\times$0,25 h, prognostiziert. Dann wird die Aufwärtsflexibilität gemäß Fo=Eo auf einen Wert von 1,2 kW und die Abwärtsflexibilität gemäß Fu=Eu auf einen Wert von 0,6 kW festgelegt. Vorzugsweise werden diese Flexibilitätswerte mit einem Sicherheitsfaktor multipliziert, der kleiner als 100% ist und beispielsweise 99% oder 98% oder 95% oder 90% beträgt.

Beispiel 2: Die Anlage umfasst eine Elektrolysezelle, die nur Ausspeisungsleistung aufnehmen kann. Die Prognose sieht für die Zeitspanne vor, dass die Elektrolysezelle während der Dauer zwar eine geplante Ausspeisungsleistung A0 in Höhe von 1 kW, entsprechend elektrischer Energie in Höhe von 0,25 kWh = 1 kW$\times$0,25 h, aufnehmen soll, aber ihre Ausspeisungsleistung bis auf einen maximalen Wert A2 von 4 kW, entsprechend elektrischer Energie in Höhe von 1 kWh = 4 kW$\times$0,25 h, anheben und bis auf einen minimalen Wert A1 von 0 kW, entsprechend elektrischer Energie in Höhe von 0 kWh = 0 kW×0,25 h, absenken kann. Aus diesen Daten wird ein maximaler Ausspeisungsleistungsanstieg gemäß Ao = A2-A0 in Höhe von 3 kW = 4 kW-1 kW, entsprechend elektrischer Energie in Höhe von 0,74 kWh = 3 kW×0,25 h, und ein maximaler Ausspeisungsleistungsabfall gemäß Au = A0-A1 in Höhe von 1 kW = 1 kW-0 kW, entsprechend elektrischer Energie in Höhe von 0,25 kWh = 1 kW×0,25 h, prognostiziert. Dann wird die Aufwärtsflexibilität gemäß Fo=Au auf einen Wert von 1 kW und die Abwärtsflexibilität gemäß Fu=Ao auf einen Wert von 3 kW festgelegt. Vorzugsweise werden diese Flexibilitätswerte mit einem Sicherheitsfaktor multipliziert, der kleiner als 100% ist und beispielsweise 99% oder 98% oder 95% oder 90% beträgt.

Beispiel 3: Die Anlage ist ein Stahlwerk und umfasst ein Gaskraftwerk, das nur Einspeisungsleistung abgeben kann, und einen Lichtbogenofen, der nur Ausspeisungsleistung aufnehmen kann. Die Prognose sieht für die Zeitspanne zum Einen vor, dass das Gaskraftwerk während der Dauer zwar eine geplante Einspeisungsleistung E0 in Höhe von 20 MW abgeben soll, aber seine Einspeisungsleistung bis auf einen maximalen Wert E2 von 50 MW anheben und bis auf einen minimalen Wert E1 von 4 MW absenken kann. Die Prognose sieht für die Zeitspanne zum Anderen vor, dass der Lichtbogenofen während der Dauer zwar eine geplante Ausspeisungsleistung A0 in Höhe von 5 MW aufnehmen soll, aber seine Ausspeisungsleistung bis auf einen maximalen Wert A2 von 11 MW anheben und bis auf einen minimalen Wert A1 von 3 MW absenken kann. Aus diesen Daten wird ein maximaler Einspeisungsleistungsanstieg gemäß Eo = E2-E0 in Höhe von 30 MW = 50 MW-20 MW und ein maximaler Einspeisungsleistungsabfall gemäß Eu = E0-E1 in Höhe von 16 MW = 20 MW-4 MW sowie ein maximaler Ausspeisungsleistungsanstieg gemäß Ao = A2-A0 in Höhe von 6 MW = 11 MW-5 MW und ein maximaler Ausspeisungsleistungsabfall gemäß Au = A0-A1 in Höhe von 2 MW = 5 MW-3 MW prognostiziert. Dann wird die Aufwärtsflexibilität gemäß Fo = Eo+Au auf einen Wert von 32 MW = 30 MW+2 MW und die Abwärtsflexibilität gemäß Fu = Ao+Eu auf einen Wert von 22 MW = 6 MW+16 MW festgelegt. Vorzugsweise werden diese Flexibilitätswerte mit einem Sicherheitsfaktor multipliziert, der kleiner als 100% ist und beispielsweise 99% oder 98% oder 95% oder 90% beträgt.

Beispiel 4: Die Anlage umfasst ein Batterie-Speicherkraftwerk, das sowohl Einspeisungsleistung abgeben als auch Ausspeisungsleistung aufnehmen kann. Die Prognose sieht für die Zeitspanne vor, dass das Batterie-Speicherkraftwerk während der Dauer zwar eine geplante Einspeisungsleistung E0 in Höhe von 0 kW abgeben und eine geplante Ausspeisungsleistung A0 in Höhe von 5 kW aufnehmen soll, aber seine Einspeisungsleistung bis auf einen maximalen Wert E2 von 6 kW anheben und nicht unter den Wert E1 von 0 kW absenken sowie seine Ausspeisungsleistung bis auf einen maximalen Wert A2 von 9 kW anheben und bis auf einen minimalen Wert A1 von 0 kW absenken kann. Aus diesen Daten wird ein maximaler Einspeisungsleistungsanstieg gemäß Eo = E2-E0 in Höhe von 6 kW = 6 kW-0 kW und ein maximaler Einspeisungsleistungsabfall gemäß Eu = E0-E1 in Höhe von 0 kW = 0 kW-0 kW sowie ein maximaler Ausspeisungsleistungsanstieg gemäß Ao = A2-A0 in Höhe von 4 kW = 9 kW-5 kW und ein maximaler Ausspeisungsleistungsabfall gemäß Au = A0-A1 in Höhe von 5 kW = 5 kW-0 kW prognostiziert. Dann wird die Aufwärtsflexibilität gemäß Fo = Eo+Au auf einen Wert von 11 kW = 6 kW+5 kW und die Abwärtsflexibilität gemäß Fu = Ao+Eu auf einen Wert von 4 kW = 4 kW+0 kW festgelegt. Vorzugsweise werden diese Flexibilitätswerte mit einem Sicherheitsfaktor multipliziert, der kleiner als 100% ist und beispielsweise 99% oder 98% oder 95% oder 90% beträgt.

Der Verkaufsschwellenpreis stellt in Hinblick auf den Stromhandel einen von der Anlage geforderten Mindestpreis dar, zu dem die Anlage sich verpflichtet, in der Zeitspanne mehr Leistung in das Stromnetz einzuspeisen, also mehr Einspeisungsleistung abzugeben, und/oder weniger Leistung aus dem Stromnetz auszuspeisen, also weniger Ausspeisungsleistung abzunehmen. Der Einkaufsschwellenpreis stellt in Hinblick auf den Stromhandel einen von der Anlage gebotenen Höchstpreis dar, zu dem die Anlage sich verpflichtet, in der Zeitspanne weniger Leistung in das Stromnetz einzuspeisen, also weniger Einspeisungsleistung abzugeben, und/oder mehr Leistung aus dem Stromnetz auszuspeisen, also mehr Ausspeisungsleistung abzunehmen. Diese Schwellenpreise sind Relativpreise, die auf die Energiemenge bezogen sind, und haben beispielsweise die Einheit €/MWh.

Die Basismenge ist die Menge des Basiswerts, also die Menge an positiver oder negativer Abrufleistung, und hat beispielsweise die Einheit MW, und der Basispreis ist der Preis des Basiswerts. Der Basispreis ist ein Relativpreis, der auf die Energiemenge bezogen ist, und hat beispielsweise die Einheit €/MWh. Die positive Abrufleistung bedeutet in Hinblick auf das Stromhandelsgeschäft, dass dem Stromnetz mehr Leistung zur Verfügung steht und/oder dass in das Stromnetz mehr Leistung als geplant eingespeist wird und/oder dass aus dem Stromnetz weniger Leistung als geplant ausgespeist wird. Somit ist der Verkaufsschwellenpreis derjenige Preis, zu dem oder ab dem die Anlage bereit ist, positive Abrufleistung zu liefern und sozusagen ihre Aufwärtsflexibilität zu belasten. Die negative Abrufleistung bedeutet in Hinblick auf das Stromhandelsgeschäft, dass dem Stromnetz weniger Leistung zur Verfügung steht und/oder dass in das Stromnetz weniger Leistung als geplant eingespeist wird und/oder dass aus dem Stromnetz mehr Leistung als geplant ausgespeist wird. Somit ist der Einkaufsschwellenpreis derjenige Preis, zu dem oder bis zu dem die Anlage bereit ist, negative Abrufleistung zu liefern und sozusagen die Abwärtsflexibilität zu belasten.

Das vorgeschlagene Verfahren und das vorgeschlagene System können jeweils nach Bedarf auf beliebige Weise ausgebildet sein, beispielsweise zum Steuern keiner zusätzlichen oder wenigstens einer zusätzlichen elektrischen Anlage.

Jede der Anlagen kann nach Bedarf auf beliebige Weise ausgebildet sein, beispielsweise als Kraftwerk oder Fabrik und/oder derart, das sie keine zusätzliche oder wenigstens eine zusätzliche elektrische Energiequelle und/oder keine zusätzliche oder wenigstens eine zusätzliche elektrische Energiesenke umfasst.

Jede der Energiequellen kann nach Bedarf auf beliebige Weise ausgebildet sein, beispielsweise als Batterie-Speicherkraftwerk, Pumpspeicherkraftwerk, Druckluftspeicherkraftwerk, Schwungrad-Speicherkraftwerk, Batterie, Kondensator, Elektroauto, Plug-In-Hybridelektrokraftfahrzeug, Traktionsbatterie, Elektrogenerator, Brennstoffzelle, Wasserkraftwerk, Dampfturbine, Gasturbine, Sonnenwärmekraftwerk, Geothermiekraftwerk, Kohlekraftwerk, Ölkraftwerk, Gaskraftwerk, Biomassekraftwerk, Müllverbrennungsanlage, Kernkraftwerk, Gezeitenkraftwerk, Blockheizkraftwerk, Industriekraftwerk, Windkraftanlage oder Photovoltaikanlage.

Jede der Energiesenken kann nach Bedarf auf beliebige Weise ausgebildet sein, beispielsweise als Batterie-Speicherkraftwerk, Pumpspeicherkraftwerk, Druckluftspeicherkraftwerk, Schwungrad-Speicherkraftwerk, Batterie, Kondensator, Elektroauto, Plug-In-Hybridelektrokraftfahrzeug, Traktionsbatterie, Elektromotor, Montagelinie, Abfüllanlage, Walzstraße, Kühlraum, Verpackungsmaschine, Druckmaschine, Werkzeugmaschine, Schmelzofen, Lichtbogenofen, Induktionsofen, Drehrohrofen, Wärmepumpe, Förderband, Kläranlage, Aufbereitungsanlage, Raffinerie, Elektrolysezelle, Ladestation, Klimaanlage, Heizlüfter, Waschmaschine, Wäschetrockner, Geschirrspülmaschine, Fernsehgerät, Elektrobackofen, Elektroherd, Mikrowellenherd, Kaffeemaschine, Kühlschrank oder Gefriertruhe.

Vorzugsweise ist wenigstens eine der Energiesenken über wenigstens ein anlageninternes Stromnetz, das im Folgenden auch als Anlagennetz bezeichnet wird, an wenigstens eine der Energiequellen gekoppelt.

Das Ansteuern der Anlage umfasst beispielsweise ein Ändern der Leistungsabgabe wenigstens einer der Energiequellen in wenigstens eines der Anlagennetze und/oder ein Trennen wenigstens einer der Energiequellen von wenigstens einem der Anlagennetze und/oder ein Verbinden wenigstens einer der Energiequellen mit wenigstens einem der Anlagennetze und/oder ein Ändern der Leistungsabgabe wenigstens einer der Energiequellen in wenigstens eines der Anlagennetze und/oder ein Trennen wenigstens einer der Energiequellen von dem Stromnetz und/oder ein Verbinden wenigstens einer der Energiequellen mit dem Stromnetz und/oder ein Ändern der Leistungsaufnahme wenigstens einer der Energiesenken aus wenigstens einem der Anlagennetze und/oder ein Trennen wenigstens einer der Energiesenken von wenigstens einem der Anlagennetze und/oder ein Verbinden wenigstens einer der Energiesenken mit wenigstens einem der Anlagennetze und/oder ein Ändern der Leistungsaufnahme wenigstens einer der Energiesenken aus dem Stromnetz und/oder ein Trennen wenigstens einer der Energiesenken von dem Stromnetz und/oder ein Verbinden wenigstens einer der Energiesenken mit dem Stromnetz.

Das vorgeschlagene Verfahren kann nach Bedarf auf beliebige Weise ausgebildet sein, beispielsweise derart, dass für die Zeitspanne kein zusätzliches oder wenigstens ein zusätzliches Stromhandelsgeschäft abgeschlossen wird. Vorzugsweise überschreiten die Abrufleistungen der für die Zeitspanne abgeschlossenen Stromhandelsgeschäfte jedoch insgesamt nicht die entsprechende Flexibilität.

Bei einer Ausführungsform des vorgeschlagenen Verfahrens ist spezifiziert, dass das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises umfasst, dass historische Daten und/oder Plandaten und/oder Echtzeit-Daten ausgewertet werden. Die historischen Daten, die Plandaten und/oder die Echtzeit-Daten umfassen jeweils beispielsweise Daten, die zumindest teilweise den Betrieb wenigstens einer der Anlagen und/oder wenigstens einer der Energiequellen und/oder wenigstens einer der Energiesenken betreffen und beispielsweise den Zeitverlauf der Auslastung wenigstens einer der Anlagen und/oder wenigstens einer der Energiequellen und/oder wenigstens einer der Energiesenken und/oder den Zeitverlauf der Leistungsaufnahme wenigstens einer der Anlagen und/oder wenigstens einer der Energiesenken und/oder den Zeitverlauf der Leistungsabgabe wenigstens einer der Anlagen und/oder wenigstens einer der Energiequellen umfassen. Die historischen Daten betreffen beispielsweise den bisherigen, vergangenen Betrieb wenigstens einer der Anlagen und/oder wenigstens einer der Energiequellen und/oder wenigstens einer der Energiesenken. Die Plandaten betreffen beispielsweise den geplanten, zukünftigen Betrieb wenigstens einer der Anlagen und/oder wenigstens einer der Energiequellen und/oder wenigstens einer der Energiesenken. Die Echtzeit-Daten betreffen beispielsweise den aktuellen Betrieb wenigstens einer der Anlagen und/oder wenigstens einer der Energiequellen und/oder wenigstens einer der Energiesenken. Alternativ oder zusätzlich zu diesem Auswerten können nach Bedarf auch andere Daten ausgewertet werden.

Bei einer Ausführungsform des vorgeschlagenen Verfahrens ist spezifiziert, dass die Echtzeit-Daten zumindest teilweise mit Hilfe wenigstens eines Sensors ermittelt werden.

Bei einer Ausführungsform des vorgeschlagenen Systems ist spezifiziert, dass das System einen Sensor umfasst, der an die Anlage gekoppelt werden kann oder gekoppelt ist und/oder in Wirkverbindung mit der Anlage stehen kann oder steht und derart ausgebildet ist, dass mit Hilfe des Sensors das Ermitteln zumindest eines Teils der Echtzeit-Daten erfolgen kann oder erfolgt. Das System kann nach Bedarf auf beliebige Weise ausgebildet sein, beispielsweise derart, dass es keinen zusätzlichen oder wenigstens einen zusätzlichen Sensor umfasst.

Bei einer Ausführungsform des vorgeschlagenen Verfahrens ist spezifiziert, dass

- eine Verfügbarkeit der Anlage ermittelt wird;
- falls die ermittelte Verfügbarkeit nicht den Wert "verfügbar" hat, oder, falls die ermittelte Verfügbarkeit den Wert "nicht verfügbar" hat, das abgeschlossene Stromhandelsgeschäft gekündigt oder aufgehoben oder ausgeglichen wird.

Dieses Ermitteln kann nach Bedarf auf beliebige Weise erfolgen, beispielsweise mit Hilfe wenigstens eines der Sensoren und/oder mit Hilfe wenigstens eines Verfügbarkeitsschalters, den eine Bedienperson der Anlage betätigen kann, wodurch die Verfügbarkeit auf den Wert "nicht verfügbar" gesetzt wird.

Jeder der Verfügbarkeitsschalter kann nach Bedarf auf beliebige Weise ausgebildet sein, beispielsweise als Not-Aus-Schalter oder als Not-Halt-Schalter und/oder derart, dass er wenigstens einer der Energiequellen und/oder wenigstens einer der Energiesenken zugeordnet ist.

Vorzugsweise ist spezifiziert, dass das Aufheben oder Ausgleichen des abgeschlossenen Stromhandelsgeschäfts mit Hilfe eines gegenläufigen Stromhandelsgeschäfts erfolgt. Das Aufheben oder Ausgleichen kann nach Bedarf auf beliebige Weise erfolgen, beispielsweise mit Hilfe von keinem zusätzlichen oder wenigstens einem zusätzlichen gegenläufigen Stromhandelsgeschäft.

Vorzugsweise ist spezifiziert, dass wenigstens eines der gegenläufigen Stromhandelsgeschäfte analog zu dem Abschließen des abgeschlossenen Stromhandelsgeschäfts abgeschlossen wird.

Bei einer Ausführungsform des vorgeschlagenen Verfahrens ist spezifiziert, dass das Ansteuern und/oder das Ermitteln einer Verfügbarkeit mit Hilfe wenigstens einer Fernwirkbox erfolgt.

Bei einer Ausführungsform des vorgeschlagenen Systems ist spezifiziert, dass

- das System eine Fernwirkbox umfasst, die an die Anlage gekoppelt werden kann oder gekoppelt ist und/oder in Wirkverbindung mit der Anlage stehen kann oder steht und derart ausgebildet ist, dass

  - mit Hilfe der Fernwirkbox das Ansteuern und/oder das Ermitteln einer Verfügbarkeit erfolgen kann oder erfolgt; und/oder
  - die Fernwirkbox das Ansteuern und/oder das Ermitteln einer Verfügbarkeit ausführen kann oder ausführt.

Das System kann nach Bedarf auf beliebige Weise ausgebildet sein, beispielsweise derart, dass es keine zusätzliche oder wenigstens eine zusätzliche Fernwirkbox umfasst.

Jede der Fernwirkboxen kann nach Bedarf auf beliebige Weise ausgebildet sein, beispielsweise derart, dass sie an wenigstens einen der Sensoren gekoppelt ist und/oder mit wenigstens einem der Sensoren in Wirkverbindung steht und/oder wenigstens einen der Sensoren umfasst.

Bei einer Ausführungsform des vorgeschlagenen Verfahrens ist spezifiziert, dass das Vorgeben der Zeitspanne und/oder das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts mit Hilfe wenigstens einer Steuereinrichtung erfolgt.

Bei einer Ausführungsform des vorgeschlagenen Systems ist spezifiziert, dass

- das System eine Steuereinrichtung umfasst, die an die Anlage gekoppelt werden kann oder gekoppelt ist und/oder in Wirkverbindung mit der Anlage stehen kann oder steht und derart ausgebildet ist, dass

  - mit Hilfe der Steuereinrichtung das Vorgeben der Zeitspanne und/oder das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts erfolgen kann oder erfolgt; und/oder
  - die Steuereinrichtung das Vorgeben der Zeitspanne und/oder das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts ausführen kann oder ausführt.

Das System kann nach Bedarf auf beliebige Weise ausgebildet sein, beispielsweise derart, dass es keine zusätzliche oder wenigstens eine zusätzliche Steuereinrichtung umfasst.

Jede der Steuereinrichtungen kann nach Bedarf auf beliebige Weise ausgebildet sein, beispielsweise derart, dass sie an wenigstens eine der Fernwirkboxen gekoppelt ist und/oder mit wenigstens einer der Fernwirkboxen in Wirkverbindung steht und/oder in wenigstens eine der Fernwirkboxen integriert ist und/oder wenigstens eine der Fernwirkboxen umfasst und/oder an wenigstens einen der Sensoren gekoppelt ist und/oder mit wenigstens einem der Sensoren in Wirkverbindung steht und/oder wenigstens einen der Sensoren umfasst.

Bei einer Ausführungsform des vorgeschlagenen Verfahrens ist spezifiziert, dass das Abschließen wenigstens eines der Stromhandelsgeschäfte und/oder das Kündigen oder Aufheben oder Ausgleichen wenigstens eines der abgeschlossenen Stromhandelsgeschäft mit Hilfe wenigstens einer Strombörse erfolgt.

Bei einer Ausführungsform des vorgeschlagenen Systems ist spezifiziert, dass

- eine Strombörse an das System gekoppelt werden kann oder gekoppelt ist und/oder in Wirkverbindung mit dem System stehen kann oder steht und derart ausgebildet ist, dass

  - mit Hilfe der Strombörse das Abschließen wenigstens eines der Stromhandelsgeschäfte und/oder das Kündigen oder Aufheben oder Ausgleichen wenigstens eines der abgeschlossenen Stromhandelsgeschäfte erfolgen kann oder erfolgt; und/oder
  - die Strombörse das Abschließen wenigstens eines der Stromhandelsgeschäfte und/oder das Kündigen oder Aufheben oder Ausgleichen wenigstens eines der abgeschlossenen Stromhandelsgeschäfte ausführen kann oder ausführt.

Das System kann nach Bedarf auf beliebige Weise ausgebildet sein, beispielsweise derart, dass es an keine zusätzliche oder wenigstens eine zusätzliche Strombörse gekoppelt werden kann oder gekoppelt ist und/oder in Wirkverbindung mit keiner zusätzlichen oder wenigstens einer zusätzlichen Strombörse stehen kann oder steht.

Vorzugsweise ist spezifiziert, dass das System wenigstens eine der Strombörsen umfasst.

Jede der Strombörsen kann nach Bedarf auf beliebige Weise ausgebildet sein, beispielsweise als Computerbörse und/oder derart, dass sie an wenigstens eine der Steuereinrichtungen gekoppelt werden kann oder gekoppelt ist und/oder in Wirkverbindung mit wenigstens einer der Steuereinrichtungen stehen kann oder steht und/oder in wenigstens eine der Steuereinrichtungen integriert ist.

Bei einer Ausführungsform des vorgeschlagenen Verfahrens ist spezifiziert, dass das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts mit Hilfe wenigstens eines künstlichen neuronalen Netzes, abgekürzt mit KNN, erfolgt.

Bei einer Ausführungsform des vorgeschlagenen Systems ist spezifiziert, dass

- das System ein künstliches neuronales Netz umfasst und derart ausgebildet ist, dass

  - mit Hilfe des künstlichen neuronalen Netzes das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts erfolgen kann oder erfolgt; und/oder
  - das künstliche neuronale Netz das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschlie-ßen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts ausführen kann oder ausführt.

Das System kann nach Bedarf auf beliebige Weise ausgebildet sein, beispielsweise derart, dass es kein zusätzliches oder wenigstens ein zusätzliches KNN umfasst.

Jedes der KNNs kann nach Bedarf auf beliebige Weise ausgebildet sein, beispielsweise derart, dass es an wenigstens eine der Steuereinrichtungen gekoppelt ist und/oder mit wenigstens einer der Steuereinrichtungen in Wirkverbindung steht und/oder in wenigstens eine der Steuereinrichtungen integriert ist.

Bei einer Ausführungsform des vorgeschlagenen Verfahrens ist spezifiziert, dass historische Daten, Plandaten und/oder Echtzeit-Daten in wenigstens einer Datenbank gespeichert werden und/oder sind.

Bei einer Ausführungsform des vorgeschlagenen Systems ist spezifiziert, dass das System eine Datenbank umfasst, in der historische Daten, Plandaten und/oder Echtzeit-Daten gespeichert werden können oder gespeichert werden und/oder gespeichert sein können oder gespeichert sind. Das System kann nach Bedarf auf beliebige Weise ausgebildet sein, beispielsweise derart, dass es keine zusätzliche oder wenigstens eine zusätzliche Datenbank umfasst.

Jede der Datenbanken kann nach Bedarf auf beliebige Weise ausgebildet sein, beispielsweise derart, dass sie an wenigstens eine der Fernwirkboxen gekoppelt ist und/oder mit wenigstens einer der Fernwirkboxen in Wirkverbindung steht und/oder in wenigstens eine der Fernwirkboxen integriert ist und/oder an wenigstens eine der Steuereinrichtungen gekoppelt ist und/oder mit wenigstens einer der Steuereinrichtungen in Wirkverbindung steht und/oder in wenigstens eine der Steuereinrichtungen integriert ist und/oder an wenigstens eines der KNNs gekoppelt ist und/oder mit wenigstens einem der KNNs in Wirkverbindung steht und/oder in wenigstens eines der KNNs integriert ist.

Mit jedem der vorgeschlagenen Systeme kann beispielsweise eines der vorgeschlagenen Verfahren ausgeführt werden. Jedes der vorgeschlagenen Systeme kann beispielsweise derart ausgebildet sein oder dazu dienen oder dafür geeignet sein, dass es eines der vorgeschlagenen Verfahren ausführt oder ausführen kann.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielsweise anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in

FIG. 1      eine bevorzugte Ausführungsform eines erfindungsgemäßen Systems zum Steuern einer elektrischen Anlage;

FIG. 2      eine erste Ausführungsform eines erfindungsgemäßen Verfahrens zum Steuern einer elektrischen Anlage;

FIG. 3      eine zweite Ausführungsform des Verfahrens.

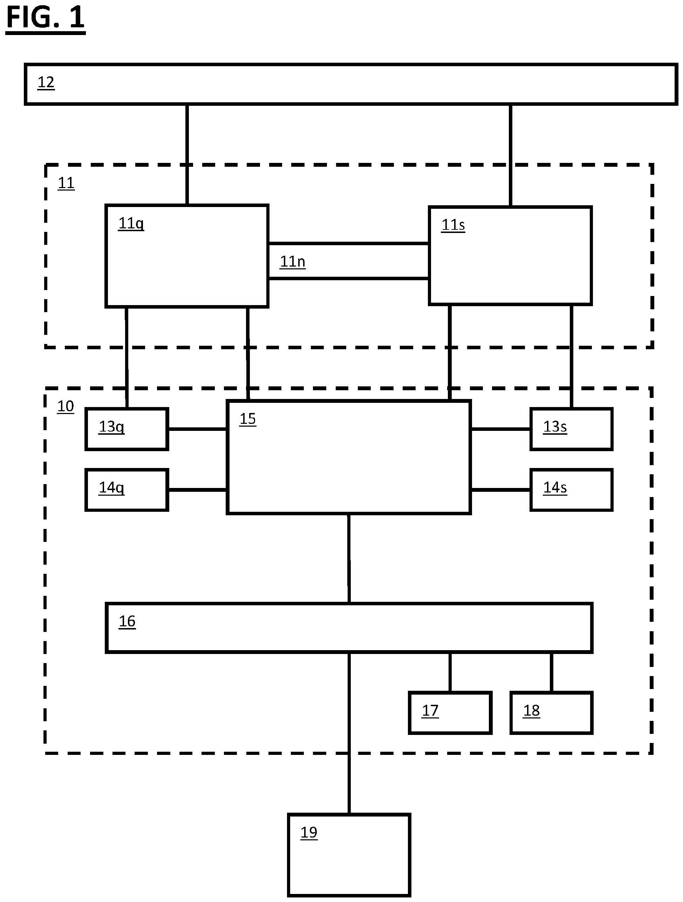

In FIG. 1 ist eine bevorzugte Ausführungsform eines erfindungsgemäßen Systems 10 zum Steuern einer elektrischen Anlage 11 schematisch dargestellt. Die Anlage 11 ist beispielsweise ein Stahlwerk 11 und umfasst eine Energiequelle 11q in Gestalt eines Gaskraftwerks 11q, eine Energiesenke 11s in Gestalt eines Lichtbogenofens 11s und ein anlageninternes oder werksinternes Stromnetz oder Anlagennetz oder Werksnetz 11n. Die Energiesenke 11s ist an ein öffentliches Stromnetz 12 und zudem über das Werksnetz 11n an die Energiequelle 11q gekoppelt. Die Energiequelle 11q ist ebenfalls an das Stromnetz 12 gekoppelt. Somit ist die Anlage 11 an das Stromnetz 12 gekoppelt.

Das System 10 umfasst einen ersten und einen zweiten Sensor 13q, 13s, einen ersten und einen zweiten Verfügbarkeitsschalter 14q, 14s, eine Fernwirkbox 15, eine Steuereinrichtung 16, ein künstliches neuronales Netz 17 und eine Datenbank 18. Der erste Sensor 13q ist an die Energiequelle 11q gekoppelt, und der zweite Sensor 13s ist an die Energiesenke 11s gekoppelt. Die Fernwirkbox 15 ist an die Energiequelle 11q, die Energiesenke 11s, die Sensoren 13q, 13s und die Verfügbarkeitsschalter 14q, 14s gekoppelt. Die Steuereinrichtung 16 ist an die Fernwirkbox 15 gekoppelt. Das KNN 17 und die Datenbank 18 sind an die Steuereinrichtung 16 gekoppelt. Eine Strombörse 19 in Gestalt einer Computerbörse 19 ist an die Steuereinrichtung 16 gekoppelt. Somit sind die Sensoren 13q, 13s an die Anlage 11 gekoppelt, ist die Fernwirkbox 15 an die Anlage 11 gekoppelt, ist die Steuereinrichtung 16 an die Anlage 11, die Sensoren 13q, 13s und die Verfügbarkeitsschalter 14q, 14s gekoppelt, ist das System 10 an die Anlage 11 gekoppelt, und ist die Strombörse 19 an das System 10 gekoppelt.

In der Datenbank 18 werden und sind Betriebsdaten, die für den Betrieb der Anlage 11 relevant sind und den Betrieb der Anlage 11 beschreiben, gespeichert. Diese Betriebsdaten umfassen historische Daten, Plandaten und Echtzeit-Daten. Die historischen Daten beschreiben die bisherigen, vergangenen Zeitverläufe der Auslastung der Energiequelle 11q, der Leistungsaufnahme der Energiequelle 11q, der Auslastung der Energiesenke 11s und der Leistungsabgabe der Energiesenke 11s. Die Plandaten beschreiben die geplanten, zukünftigen Zeitverläufe der Auslastung der Energiequelle 11q, der Leistungsaufnahme der Energiequelle 11q, der Auslastung der Energiesenke 11s und der Leistungsabgabe der Energiesenke 11s. Die Echtzeit-Daten beschreiben die aktuellen Zeitverläufe der Auslastung der Energiequelle 11q, der Leistungsaufnahme der Energiequelle 11q, der Auslastung der Energiesenke 11s und der Leistungsabgabe der Energiesenke 11s.

Mit Hilfe des Sensors 13q werden die Echtzeit-Daten der Energiequelle 11q ermittelt, und mit Hilfe des Sensors 13s werden die Echtzeit-Daten der Energiesenke 11s ermittelt. Der Sensor 13q umfasst einen Leistungsmesser, der die von der Energiequelle 11q abgegebene elektrische Leistung erfasst, sowie eine Überwachungseinrichtung, die den Zustand, den Abnutzungsgrad sowie etwaige Störungen der Energiequelle 11q überwacht und entsprechende Überwachungssignale erzeugt und an die Fernwirkbox 15 sendet. Der Sensor 13s umfasst einen Leistungsmesser, der die von der Energiesenke 11s aufgenommene elektrische Leistung erfasst, sowie eine Überwachungseinrichtung, die den Zustand, den Abnutzungsgrad sowie etwaige Störungen der Energiesenke 11s überwacht und entsprechende Überwachungssignale an die Fernwirkbox 15 sendet.

Jeder Verfügbarkeitsschalter 14q, 14s kann einen ersten und einen zweiten Schaltzustand einnehmen und sendet entsprechende Schaltersignale an die Fernwirkbox 15. Falls eine Bedienperson einen der Verfügbarkeitsschalter 14q, 14s betätigt, so nimmt dieser Verfügbarkeitsschalter 14q, 14s seinen zweiten Schaltzustand ein, ohne diese Betätigung nimmt dieser Verfügbarkeitsschalter 14q, 14s seinen ersten Schaltzustand ein.

Mit Hilfe der Fernwirkbox 15 werden die Energiequelle 11q und die Energiesenke 11s angesteuert. Dieses Ansteuern umfasst ein Ändern der Leistungsabgabe der Energiequelle 11q in das Werksnetz 11n, ein Trennen der Energiequelle 11q von dem Werksnetz 11n, ein Verbinden der Energiequelle 11q mit dem Werksnetz 11n, ein Ändern der Leistungsabgabe der Energiequelle 11q in das Stromnetz 12, ein Trennen der Energiequelle 11q von dem Stromnetz 12, ein Verbinden der Energiequelle 11q mit dem Stromnetz 12, ein Ändern der Leistungsaufnahme der Energiesenke 11s aus dem Werksnetz 11n, ein Trennen der Energiesenke 11s von dem Werksnetz 11n, ein Verbinden der Energiesenke 11s mit dem Werksnetz 11n, ein Ändern der Leistungsaufnahme der Energiesenke 11s aus dem Stromnetz 12, ein Trennen der Energiesenke 11s von dem Stromnetz 12 und ein Verbinden der Energiesenke 11s mit dem Stromnetz 12.

Mit Hilfe der Fernwirkbox 15 wird die Verfügbarkeit der Energiequelle 11q in Abhängigkeit von den Überwachungssignalen des Sensors 13q ermittelt und entsprechend auf den Wert "verfügbar" oder auf den Wert "nicht verfügbar" gesetzt. Die Fernwirkbox 15 sendet den jeweiligen Wert, der von dieser aktuell ermittelten Verfügbarkeit abhängt, kontinuierlich an die Steuereinrichtung 16, falls das Schaltersignal des Verfügbarkeitsschalters 14q dem zweiten Schaltzustand entspricht, andernfalls, also falls das Schaltersignal dieses Verfügbarkeitsschalters 14q dem ersten Schaltzustand oder nicht dem zweiten Schaltzustand entspricht, sendet die Fernwirkbox 15 den Wert "nicht verfügbar" an die Steuereinrichtung 16. Mit Hilfe der Fernwirkbox 15 wird die Verfügbarkeit der Energiesenke 11s in Abhängigkeit von den Überwachungssignalen des Sensors 13s ermittelt und entsprechend auf den Wert "verfügbar" oder auf den Wert "nicht verfügbar" gesetzt. Die Fernwirkbox 15 sendet den jeweiligen Wert, der von dieser aktuell ermittelten Verfügbarkeit abhängt, kontinuierlich an die Steuereinrichtung 16, falls das Schaltersignal des Verfügbarkeitsschalters 14s dem zweiten Schaltzustand entspricht, andernfalls, also falls das Schaltersignal dieses Verfügbarkeitsschalters 14s dem ersten Schaltzustand oder nicht dem zweiten Schaltzustand entspricht, sendet die Fernwirkbox 15 den Wert "nicht verfügbar" an die Steuereinrichtung 16.

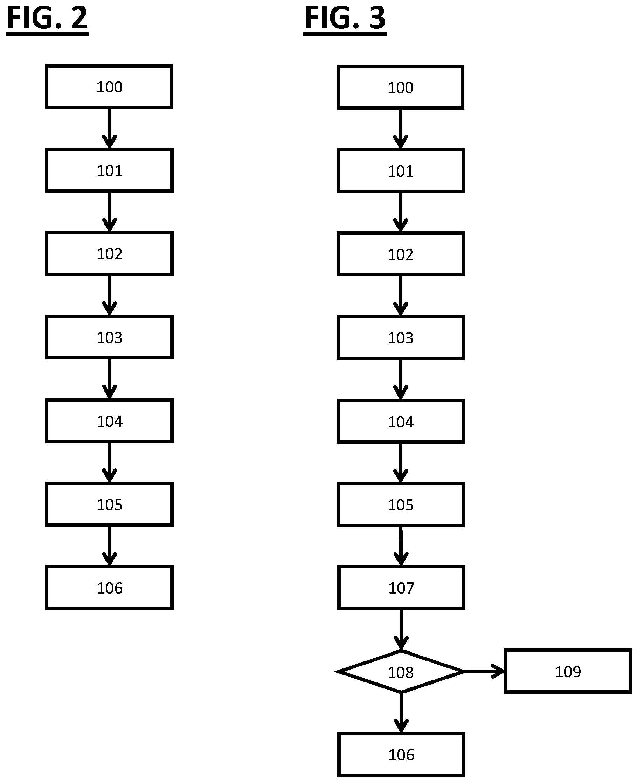

In FIG. 2 ist eine erste Ausführungsform eines erfindungsgemäßen Verfahrens zum Steuern der elektrischen Anlage 11 als Ablaufdiagramm dargestellt; bei der nachstehenden Beschreibung dieser Ausführungsform werden beispielhaft die Daten und Erläuterungen aus dem oben beschriebenen Beispiel 3 verwendet. Das System 10 ist derart ausgebildet, dass es diese Ausführungsform ausführen kann.

In einem Schritt 100 wird eine zukünftige Zeitspanne mit einem Startzeitpunkt und einer Dauer vorgegeben.

Die Dauer beträgt beispielsweise 15 Minuten beträgt, und der Startzeitpunkt beträgt beispielsweise 24 Stunden nach Beginn dieses Schrittes.

Dieser Schritt 100 wird mit Hilfe der Steuereinrichtung 16 ausgeführt.

In einem Schritt 101, der auf den Schritt 100 folgt, wird für die Zeitspanne eine Aufwärtsflexibilität festgelegt. Die Aufwärtsflexibilität umfasst einen prognostizierten maximalen Einspeisungsleistungsanstieg und einen prognostizierten maximalen Ausspeisungsleistungsabfall. Dieses Festlegen umfasst, dass Plandaten und Echtzeit-Daten ausgewertet werden.

Der maximale Einspeisungsleistungsanstieg beträgt beispielsweise $Eo = 30$ MW, der maximale Ausspeisungsleistungsabfall beträgt beispielsweise $Au = 2$ MW, und die Aufwärtsflexibilität beträgt beispielsweise $Fo = 32$ MW. Dieses Festlegen umfasst, dass Plandaten und Echtzeit-Daten ausgewertet werden.

Dieser Schritt 101 wird mit Hilfe der Steuereinrichtung 16, des KNN 17 und der Datenbank 18 ausgeführt.

In einem Schritt 102, der auf den Schritt 101 folgt, wird für die Zeitspanne eine Abwärtsflexibilität festgelegt. Die Abwärtsflexibilität umfasst einen prognostizierten maximalen Ausspeisungsleistungsanstieg und einen prognostizierten maximalen Einspeisungsleistungsabfall. Dieses Festlegen umfasst, dass Plandaten und Echtzeit-Daten ausgewertet werden.

Der maximale Ausspeisungsleistungsanstieg beträgt beispielsweise $Ao = 6$ MW, der maximale Einspeisungsleistungsabfall beträgt beispielsweise $Eu = 16$ MW, und die Abwärtsflexibilität beträgt beispielsweise $Fu = 22$ MW.

Dieser Schritt 102 wird mit Hilfe der Steuereinrichtung 16, des KNN 17 und der Datenbank 18 ausgeführt.

In einem Schritt 103, der auf den Schritt 102 folgt, wird für die Zeitspanne ein Verkaufsschwellenpreis festgelegt. Dieses Festlegen umfasst, dass historische Daten, Plandaten und Echtzeit-Daten ausgewertet werden.

Der Verkaufsschwellenpreis beträgt beispielsweise Pv = 1,20 €/MWh.

Dieser Schritt 103 wird mit Hilfe der Steuereinrichtung 16, des KNN 17 und der Datenbank 18 ausgeführt.

In einem Schritt 104, der auf den Schritt 103 folgt, wird für die Zeitspanne ein Einkaufsschwellenpreis festgelegt. Dieses Festlegen umfasst, dass historische Daten, Plandaten und Echtzeit-Daten ausgewertet werden.

Der Einkaufsschwellenpreis beträgt beispielsweise Pe = 0,80 €/MWh.

Dieser Schritt 104 wird mit Hilfe der Steuereinrichtung 16, des KNN 17 und der Datenbank 18 ausgeführt.

In einem Schritt 105, der auf den Schritt 104 folgt, wird für die Zeitspanne ein Stromhandelsgeschäft verhandelt und gegebenenfalls abgeschlossen. Das Stromhandelsgeschäft umfasst einen Basiswert, eine Basismenge, einen Basispreis, einen Termin, an dem das Stromhandelsgeschäft ausgeübt werden muss, und die Pflicht zu einer physischen Erfüllung während dieser Zeitspanne.

Gemäß einem ersten Beispielfall werden in der Verhandlung die folgenden Konditionen vorgeschlagen: der Basiswert ist eine positive Abrufleistung; die Basismenge, nämlich die Menge an positiver Abrufleistung beträgt ALp = 30 MW; der Basispreis, nämlich der Preis der positiven Abrufleistung beträgt BPp = 1,30 €/MWh. Die physische Erfüllung sollte daher umfassen, dass 30 MW an positiver Abrufleistung geliefert wird. Es wird zunächst geprüft, ob der Basiswert eine positive oder negative Abrufleistung ist. In diesem Beispielfall trifft die erste Alternative zu, sodass nun geprüft wird, ob

$$ALp \leq Fo \text{ und } BPp \geq Pv$$

gilt. Auch dies trifft in diesem Beispielfall zu, da 30 MW $\leq$ 32 MW und 1,30 €/MWh $\geq$ 1,20 €/MWh gilt. Daher wird das Stromhandelsgeschäft zu diesen vorgeschlagenen Konditionen abgeschlossen. Andernfalls würde das Stromhandelsgeschäft nicht zu diesen Konditionen abgeschlossen werden.

Gemäß einem zweiten Beispielfall werden in der Verhandlung die folgenden Konditionen vorgeschlagen: der Basiswert ist eine negative Abrufleistung; die Basismenge, nämlich die Menge an negativer Abrufleistung beträgt ALn = 22 MW; der Basispreis, nämlich der Preis der negativen Abrufleistung beträgt BPn = 0,70 €/MWh. Die physische Erfüllung sollte daher umfassen, dass 22 MW an negativer Abrufleistung geliefert wird. Es wird zunächst geprüft, ob der Basiswert eine positive oder negative Abrufleistung ist. In diesem Beispielfall trifft die zweite Alternative zu, sodass nun geprüft wird, ob

$$ALn \leq Fu \text{ und } BPn \leq Pe$$

gilt. Auch dies trifft in diesem Beispielfall zu, da 22 MW $\leq$ 22 MW und 0,70 €/MWh $\leq$ 0,80 €/MWh gilt. Daher wird das Stromhandelsgeschäft zu diesen vorgeschlagenen Konditionen abgeschlossen. Andernfalls würde das Stromhandelsgeschäft nicht zu diesen Konditionen abgeschlossen werden.

Dieser Schritt 105 wird mit Hilfe der Steuereinrichtung 16, des KNN 17, der Datenbank 18 und der Strombörse 19 ausgeführt.

In einem Schritt 106, der auf den Schritt 105 folgt, wird an dem Termin die Anlage 11 derart angesteuert, dass die Anlage 11 während der Zeitspanne den Basiswert in Höhe der Basismenge liefert, dass also die Anlage 11 im Fall der positiven Abrufleistung die Aufwärtsflexibilität bis zum Erreichen der Basismenge an positiver Abrufleistung und im Fall der negativen Abrufleistung die Abwärtsflexibilität bis zum Erreichen der Basismenge an negativer Abrufleistung belastet.

In dem in Schritt 105 beschriebenen ersten Beispielfall belastet die Anlage 11 während der Zeitspanne die Aufwärtsflexibilität bis zum Erreichen von ALp = 30 MW und somit nur teilweise, da ALp < Fo gilt. Dieses Belasten erfolgt, indem beispielsweise die Energiequelle 11q ihre Einspeisungsleistung von dem geplanten Wert E0 = 20 MW bis auf den maximalen Wert E2 = 50 MW anhebt und die Energiesenke 11s ihre Ausspeisungsleistung unverändert bei dem geplanten Wert A0 = 5 MW lässt, oder indem beispielsweise die Energiesenke 11s ihre Ausspeisungsleistung von dem geplanten Wert A0 = 5 MW bis auf den minimalen Wert A1 = 3 MW absenkt und die Energiequelle 11q ihre Einspeisungsleistung von dem geplanten Wert E0 = 20 MW bis auf 48 MW anhebt, oder indem beispielsweise die Energiesenke 11s ihre Ausspeisungsleistung von dem geplanten Wert A0 = 5 MW bis auf 4 MW absenkt und die Energiequelle 11q ihre Einspeisungsleistung von dem geplanten Wert E0 = 20 MW bis auf 49 MW anhebt. Auch andere Kombinationen sind bei Bedarf möglich, solange die 30 MW erreicht werden.

In dem in Schritt 105 beschriebenen zweiten Beispielfall belastet die Anlage 11 während der Zeitspanne die Abwärtsflexibilität bis zum Erreichen von Fu = 22 MW und somit vollständig, da ALn = Fu gilt. Dieses Belasten erfolgt, indem beispielsweise die Energiequelle 11q ihre Einspeisungsleistung von dem geplanten Wert E0 = 20 MW bis auf den minimalen Wert E1 = 4 MW absenkt und die Energiesenke 11s ihre Ausspeisungsleistung von dem geplanten Wert A0 = 5 MW bis auf den maximalen Wert A2 = 11 MW anhebt.

Dieser Schritt 106 wird mit Hilfe der Steuereinrichtung 16, der Sensoren 13q, 13s, der Fernwirkbox 15 und des KNN 17 ausgeführt.

In FIG. 3 ist eine zweite Ausführungsform des Verfahrens zum Steuern der elektrischen Anlage 11 als Ablaufdiagramm dargestellt. Diese Ausführungsform ähnelt der ersten Ausführungsform, sodass im Folgenden vor Allem die Unterschiede näher erläutert werden. Das System 10 ist derart ausgebildet, dass es diese Ausführungsform ausführen kann.

In einem Schritt 107, der auf den Schritt 105 folgt, wird eine Verfügbarkeit der Anlage 11 ermittelt. Dieses Ermitteln erfolgt auf die weiter oben in Zusammenhang mit dem System 10 beschriebene Weise.

Dieser Schritt 107 wird mit Hilfe der Steuereinrichtung 16, der Sensoren 13q, 13s, der Verfügbarkeitsschalter 14q, 14s, der Fernwirkbox 15 und des KNN 17 ausgeführt.

In einem Schritt 108, der auf den Schritt 107 folgt, wird gemäß einer ersten Alternative geprüft, ob die ermittelte Verfügbarkeit den Wert "verfügbar" hat. Falls JA, erfolgt ein Sprung zu dem Schritt 106, falls NEIN, erfolgt ein Sprung zu einem Schritt 109. Gemäß einer zweiten Alternative wird geprüft, ob die ermittelte Verfügbarkeit den Wert "nicht verfügbar" hat. Falls JA, erfolgt ein Sprung zu dem Schritt 109, falls NEIN, erfolgt ein Sprung zu dem Schritt 106.

Dieser Schritt 108 wird mit Hilfe der Steuereinrichtung 16 und des KNN 17 ausgeführt.

In dem Schritt 109 wird das abgeschlossene Stromhandelsgeschäft gekündigt oder aufgehoben oder ausgeglichen. Dabei erfolgt das Aufheben oder Ausgleichen des abgeschlossenen Stromhandelsgeschäfts mit Hilfe wenigstens eines gegenläufigen Stromhandelsgeschäfts, das analog zu dem Abschließen des abgeschlossenen Stromhandelsgeschäfts abgeschlossen wird.

Dieser Schritt 109 wird mit Hilfe der Steuereinrichtung 16, der Strombörse 19 und des KNN 17 ausgeführt.

**Bezugszeichenliste**

| | |
|---|---|
| 10 | System |
| 11 | elektrische Anlage |
| 11n/11q/11s | Werksnetz/Energiequelle/Energiesenke von 11 |
| 12 | öffentliches Stromnetz |
| 13q/13s | erster/zweiter Sensor |
| 14q/14s | erster/zweiter Verfügbarkeitsschalter |
| 15 | Fernwirkbox |
| 16 | Steuereinrichtung |
| 17 | künstliches neuronales Netz, KNN |
| 18 | Datenbank |
| 19 | Strombörse |

**Patentansprüche**

**1.** Verfahren zum Steuern wenigstens einer elektrischen Anlage (11), wobei die Anlage (11) wenigstens eine elektrische Energiequelle (11q) und/oder wenigstens eine elektrische Energiesenke (11s) umfasst und an ein Stromnetz (12) gekoppelt ist, wobei

- eine zukünftige Zeitspanne mit einem Startzeitpunkt und einer Dauer vorgegeben wird;
- für die Zeitspanne eine Aufwärtsflexibilität festgelegt wird, wobei die Aufwärtsflexibilität einen prognostizierten maximalen Einspeisungsleistungsanstieg und/oder einen prognostizierten maximalen Ausspeisungsleistungsabfall umfasst;
- für die Zeitspanne eine Abwärtsflexibilität festgelegt wird, wobei die Abwärtsflexibilität einen prognostizierten maximalen Ausspeisungsleistungsanstieg und/oder einen prognostizierten maximalen Einspeisungsleistungsabfall umfasst;
- für die Zeitspanne ein Verkaufsschwellenpreis festgelegt wird;
- für die Zeitspanne ein Einkaufsschwellenpreis festgelegt wird;
- für die Zeitspanne wenigstens ein Stromhandelsgeschäft abgeschlossen wird, wobei das Stromhandelsgeschäft einen Basiswert, eine Basismenge, einen Basispreis, einen Termin, an dem oder bis zu dem das Stromhandelsgeschäft ausgeübt werden muss, und die Pflicht zu einer physischen Erfüllung während dieser Zeitspanne umfasst;
- der Basiswert eine positive oder negative Abrufleistung umfasst;
- der Termin der Startzeitpunkt ist;
- die physische Erfüllung umfasst, dass der Basiswert in Höhe der Basismenge geliefert wird;
- im Fall der positiven Abrufleistung

$$ALp \leq Fo \text{ und } BPp \geq Pv$$

gilt, worin ALp die Basismenge an positiver Abrufleistung ist, Fo die Aufwärtsflexibilität ist, BPp der Basispreis der positiven Abrufleistung ist, und Pv der Verkaufsschwellenpreis ist;
- im Fall der negativen Abrufleistung

$$ALn \leq Fu \text{ und } BPn \leq Pe$$

gilt, worin ALn die Basismenge an negativer Abrufleistung ist, Fu die Abwärtsflexibilität ist, BPn der Basispreis der negativen Abrufleistung ist, und Pe der Einkaufsschwellenpreis ist;
- an dem oder bis zu dem Termin die Anlage (11) derart angesteuert wird, dass die Anlage (11) während der Zeitspanne den Basiswert in Höhe der Basismenge liefert.

**2.** Verfahren gemäß Anspruch 1, wobei das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises umfasst, dass historische Daten, Plandaten und/oder Echtzeit-Daten ausgewertet werden.

**3.** Verfahren gemäß Anspruch 2, wobei die Echtzeit-Daten zumindest teilweise mit Hilfe wenigstens eines Sensors (13q, 13s) ermittelt werden.

**4.** Verfahren gemäß einem oder mehreren der vorherigen Ansprüche, wobei

- eine Verfügbarkeit der Anlage (11) ermittelt wird;
- falls die ermittelte Verfügbarkeit nicht den Wert "verfügbar" hat oder den Wert "nicht verfügbar" hat, das abgeschlossene Stromhandelsgeschäft gekündigt oder aufgehoben oder ausgeglichen wird.

**5.** Verfahren gemäß Anspruch 4, wobei das Aufheben oder Ausgleichen des abgeschlossenen Stromhandelsgeschäfts mit Hilfe wenigstens eines gegenläufigen Stromhandelsgeschäfts erfolgt.

**6.** Verfahren gemäß Anspruch 5, wobei das gegenläufige Stromhandelsgeschäft analog zu dem Abschließen des abgeschlossenen Stromhandelsgeschäfts abgeschlossen wird.

**7.** Verfahren gemäß einem oder mehreren der vorherigen Ansprüche, wobei das Ansteuern und/oder das Ermitteln einer Verfügbarkeit mit Hilfe wenigstens einer Fernwirkbox (15) erfolgt.

**8.** Verfahren gemäß Anspruch 7, wobei das Vorgeben der Zeitspanne und/oder das Vorgeben des Startzeitpunkts und/oder das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts mit Hilfe wenigstens einer Steuereinrichtung (16) erfolgt.

**9.** Verfahren gemäß Anspruch 8, wobei das Abschließen eines Stromhandelsgeschäfts und/oder das Kündigen oder Aufheben oder Ausgleichen des abgeschlossenen Stromhandelsgeschäfts mit Hilfe wenigstens einer Strombörse (19) erfolgt.

**10.** Verfahren gemäß einem oder mehreren der vorherigen Ansprüche, wobei das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts mit Hilfe wenigstens eines künstlichen neuronalen Netzes (17) erfolgt.

**11.** Verfahren gemäß einem oder mehreren der vorherigen Ansprüche, wobei historische Daten, Plandaten und/oder Echtzeit-Daten in wenigstens einer Datenbank (18) gespeichert werden.

**12.** System (10) zum Steuern wenigstens einer elektrischen Anlage (11), wobei die Anlage (11) wenigstens eine elektrische Energiequelle (11q) und/oder wenigstens eine elektrische Energiesenke (11s) umfasst und an ein Stromnetz (12) gekoppelt ist, wobei das System (10) an die Anlage (11) gekoppelt werden kann und ausgebildet ist, ein Verfahren auszuführen, bei dem

- eine zukünftige Zeitspanne mit einem Startzeitpunkt und einer Dauer vorgegeben wird;
- für die Zeitspanne eine Aufwärtsflexibilität festgelegt wird, wobei die Aufwärtsflexibilität einen prognostizierten maximalen Einspeisungsleistungsanstieg und/oder einen prognostizierten maximalen Ausspeisungsleistungsabfall umfasst;
- für die Zeitspanne eine Abwärtsflexibilität festgelegt wird, wobei die Abwärtsflexibilität einen prognostizierten maximalen Ausspeisungsleistungsanstieg und/oder einen prognostizierten maximalen Einspeisungsleistungsabfall umfasst;
- für die Zeitspanne ein Verkaufsschwellenpreis festgelegt wird;
- für die Zeitspanne ein Einkaufsschwellenpreis festgelegt wird;
- für die Zeitspanne wenigstens ein Stromhandelsgeschäft abgeschlossen wird, wobei das Stromhandelsgeschäft einen Basiswert, eine Basismenge, einen Basispreis, einen Termin, an dem oder bis zu dem das Stromhandelsgeschäft ausgeübt werden muss, und die Pflicht zu einer physischen Erfüllung während dieser Zeitspanne umfasst;
- der Basiswert eine positive oder negative Abrufleistung umfasst;
- der Termin der Startzeitpunkt ist;
- die physische Erfüllung umfasst, dass der Basiswert in Höhe der Basismenge geliefert wird;

- im Fall der positiven Abrufleistung

$$ALp \leq Fo \text{ und } BPp \geq Pv$$

gilt, worin ALp die Basismenge an positiver Abrufleistung ist, Fo die Aufwärtsflexibilität ist, BPp der Basispreis der positiven Abrufleistung ist, und Pv der Verkaufsschwellenpreis ist;
- im Fall der negativen Abrufleistung

$$ALn \leq Fu \text{ und } BPn \leq Pe$$

gilt, worin ALn die Basismenge an negativer Abrufleistung ist, Fu die Abwärtsflexibilität ist, BPn der Basispreis der negativen Abrufleistung ist, und Pe der Einkaufsschwellenpreis ist; und
- an dem oder bis zu dem Termin die Anlage (11) derart angesteuert wird, dass die Anlage (11) während der Zeitspanne den Basiswert in Höhe der Basismenge liefert.

13. System (10) gemäß Anspruch 12, umfassend wenigstens einen Sensor (13q, 13s), der an die Anlage (11) gekoppelt werden kann und derart ausgebildet ist, dass mit Hilfe des Sensors (13q, 13s) das Ermitteln zumindest eines Teils der Echtzeit-Daten erfolgen kann.

14. System (10) gemäß Anspruch 12 oder 13, umfassend wenigstens eine Fernwirkbox (15), die an die Anlage (11) gekoppelt ist und derart ausgebildet ist, dass die Fernwirkbox (15) das Ansteuern und/oder das Ermitteln einer Verfügbarkeit ausführen kann.

15. System (10) gemäß einem oder mehreren der Ansprüche 12 bis 14, umfassend wenigstens eine Steuereinrichtung (16), die an die Anlage (11) gekoppelt ist und derart ausgebildet ist, dass die Steuereinrichtung (16) das Vorgeben der Zeitspanne und/oder das Vorgeben des Startzeitpunkts und/oder das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts ausführen kann.

16. System (10) gemäß einem oder mehreren der Ansprüche 12 bis 15, wobei wenigstens eine Strombörse (19) an das System (10) gekoppelt werden kann und derart ausgebildet ist, dass die Strombörse (19) das Abschließen eines Stromhandelsgeschäfts und/oder das Kündigen oder Aufheben oder Ausgleichen des abgeschlossenen Stromhandelsgeschäfts ausführen kann.

17. System (10) gemäß Anspruch 16, umfassend die Strombörse (19).

18. System (10) gemäß einem oder mehreren der Ansprüche 12 bis 17, umfassend wenigstens ein künstliches neuronales Netz (17), das derart ausgebildet ist, dass das künstliche neuronale Netz (17) das Festlegen einer Aufwärtsflexibilität und/oder das Festlegen einer Abwärtsflexibilität und/oder das Festlegen eines Verkaufsschwellenpreises und/oder das Festlegen eines Einkaufsschwellenpreises und/oder das Abschließen eines Stromhandelsgeschäfts und/oder das Ansteuern und/oder das Ermitteln einer Verfügbarkeit und/oder das Kündigen oder Aufheben oder Ausgleichen des abgeschlossenen Stromhandelsgeschäfts ausführen kann.

19. System (10) gemäß einem oder mehreren der Ansprüche 12 bis 18, umfassend wenigstens eine Datenbank (18), in der historische Daten, Plandaten und/oder Echtzeit-Daten gespeichert sind.

**Claims**

1. Method for controlling at least one electrical installation (11), the installation (11) comprising at least one electrical energy source (11q) and/or at least one electrical energy sink (11s) and being coupled to a power grid (12), wherein

   - a future time period is specified with a start time and duration;
   - an upward flexibility is determined for the time period, wherein the upward flexibility comprises a predicted maximum feed-in power increase and/or a predicted maximum feed-out power decrease;
   - a downward flexibility is determined for the time period, wherein the downward flexibility comprises a predicted maximum exit power increase and/or a predicted maximum feed-in power decrease;
   - a sales threshold price is set for the time period;
   - a purchase threshold price is set for the time period;
   - at least one electricity trading transaction is entered into for the time period, the electricity trading transaction comprising a base value, a base quantity, a base price, a date on or by which the electricity trading transaction must be conducted, and the obligation to physically settle during that time period;

- the base value comprises a positive or negative power on demand;
- the date is the start time;
- physical fulfillment includes that the base value is delivered in the amount of the base quantity;
- in case of positive power on demand,

$$ALp \leq Fo \text{ and } BPp \geq Pv$$

applies, wherein ALp is the base quantity of positive power on demand, Fo is the upward flexibility, BPp is the base price of positive power on demand, and Pv is the sales threshold price;
- in case of negative power on demand,

$$ALn \leq Fu \text{ and } BPn \leq Pe$$

applies, wherein ALn is the base quantity of negative power on demand, Fu is the downward flexibility, BPn is the base price of negative power on demand, and Pe is the purchase threshold price;
- on or up to the date the installation (11) is controlled in such a way that the installation (11) supplies the base value in the amount of the base quantity during the time period.

2. Method according to claim 1, wherein the setting of an upward flexibility and/or the setting of a downward flexibility and/or the setting of a sales threshold price and/or the setting of a purchase threshold price comprises evaluating historical data, planning data and/or real-time data.

3. Method according to claim 2, wherein the real-time data is determined at least partially by means of at least one sensor (13q, 13s).

4. Method according to one ore more of the preceding claims, wherein

- an availability of the installation (11) is determined;
- if the determined availability does not have the value "available" or has the value "not available", the concluded electricity trading transaction is terminated or cancelled or settled.

5. Method according to claim 4, wherein the canceling or balancing of the concluded power trading transaction is performed by means of at least one offsetting power trading transaction.

6. Method according to claim 5, wherein the offsetting electricity trading transaction is concluded analogously to the conclusion of the concluded electricity trading transaction.

7. Method according to one or more of the preceding claims, wherein the controlling and/or the determining of an availability is performed by means of at least one telecontrol box (15).

8. Method according to claim 7, wherein the presetting of the time period and/or the presetting of the start time and/or the determination of an upward flexibility and/or the determination of a downward flexibility and/or the determination of a sales threshold price and/or the determination of a purchase threshold price and/or the conclusion of an electricity trading transaction and/or the controlling and/or the determination of an availability and/or the termination or cancellation or balancing of the concluded electricity trading transaction is carried out by means of at least one control device (16).

9. Method according to claim 8, wherein the conclusion of an electricity trading transaction and/or the termination or cancellation or balancing of the concluded electricity trading transaction takes place with the aid of at least one electricity exchange (19).

10. Method according to one or more of the preceding claims, wherein the determination of an upward flexibility and/or the determination of a downward flexibility and/or the determination of a sales threshold price and/or the determination of a purchase threshold price and/or the conclusion of a power trading transaction and/or the controlling and/or the determination of an availability and/or the termination or cancellation or balancing of the concluded power trading transaction is performed with the aid of at least one artificial neural network (17).

11. Method according to one or more of the preceding claims, wherein historical data, planning data and/or real-time data are stored in at least one database (18).

12. System (10) for controlling at least one electrical installation (11), the installation (11) comprising at least one electrical energy source (11q) and/or at least one electrical energy sink (11s) and being coupled to a power grid (12), the system (10) being couplable to the installation (11) and being configured to perform a method in which

- a future time period is specified with a start time and duration;
- an upward flexibility is determined for the time period, wherein the upward flexibility comprises a predicted maximum feed-in power increase and/or a predicted maximum feed-out power decrease;

- a downward flexibility is determined for the time period, wherein the downward flexibility comprises a predicted maximum exit power increase and/or a predicted maximum feed-in power decrease;
- a sales threshold price is set for the time period;
- a purchase threshold price is set for the time period;
- at least one electricity trading transaction is entered into for the time period, the electricity trading transaction comprising a base value, a base quantity, a base price, a date on or by which the electricity trading transaction must be conducted, and the obligation to physically settle during that time period;
- the base value comprises a positive or negative power on demand;
- the date is the start time;
- physical fulfillment includes that the base value is delivered in the amount of the base quantity;
- in case of positive power on demand,

$$ALp \leq Fo \text{ and } BPp \geq Pv$$

applies, wherein ALp is the base quantity of positive power on demand, Fo is the upward flexibility, BPp is the base price of positive power on demand, and Pv is the sales threshold price;
- in case of negative power on demand,

$$ALn \leq Fu \text{ and } BPn \leq Pe$$

applies, wherein ALn is the base quantity of negative power on demand, Fu is the downward flexibility, BPn is the base price of negative power on demand, and Pe is the purchase threshold price; and
- on or up to the date the installation (11) is controlled in such a way that the installation (11) supplies the base value in the amount of the base quantity during the time period.

13. System (10) according to claim 12, comprising at least one sensor (13q, 13s) that can be coupled to the installation (11) and is configured such that determining at least a part of the real-time data can be performed by means of the sensor (13q, 13s).

14. System (10) according to claim 12 or 13, comprising at least one telecontrol box (15) coupled to the installation (11) and configured such that the telecontrol box (15) can perform the controlling and/or the determining of an availability.

15. System (10) according to one or more of claims 12 to 14, comprising at least one control device (16) which is coupled to the installation (11) and is configured such, that the control device (16) can execute the presetting of the time period and/or the presetting of the start time and/or the setting of an upward flexibility and/or the setting of a downward flexibility and/or the setting of a sales threshold price and/or the setting of a purchase threshold price and/or the conclusion of an electricity trading transaction and/or the controlling and/or the determination of an availability and/or the termination or cancellation or balancing of the concluded electricity trading transaction.

16. System (10) according to one or more of claims 12 to 15, wherein at least one electricity exchange (19) can be coupled to the system (10) and is configured such that the electricity exchange (19) can execute the conclusion of a power trading transaction and/or the termination or cancellation or balancing of the concluded power trading transaction.

17. System (10) according to claim 16, comprising the electricity exchange (19).

18. System (10) according to one or more of claims 12 to 17, comprising at least one artificial neural network (17) configured such that the artificial neural network (17) is able to perform the setting of an upward flexibility and/or the setting of a downward flexibility and/or the setting of a sales threshold price and/or the setting of a purchase threshold price and/or the conclusion of an electricity trading transaction and/or the controlling and/or the determining of an availability and/or the terminating or cancelling or balancing of the concluded electricity trading transaction.

19. System (10) according to one or more of claims 12 to 18, comprising at least one database (18) in which historical data, planning data and/or real-time data are stored.

**Revendications**

1. Procédé de commande d'au moins une installation électrique (11), ladite installation (11) comprenant au moins une source d'énergie électrique (11q) et/ou au moins un puits d'énergie électrique (11s) et étant couplé à un réseau électrique (12), où

- une période de temps future est définie avec une moment de début et une durée;
- une flexibilité à la hausse est fixée pour ladite période de temps, ladite flexibilité à la hausse étant une augmentation maximale prévisionnelle de la puissance d'arrivée et/ou une baisse maximale prévisionnelle de la puissance de départ;

- une flexibilité à la baisse est fixée pour ladite période de temps, ladite flexibilité à la baisse étant une augmentation maximale prévisionnelle de la puissance de départ et/ou une baisse maximale prévisionnelle de la puissance d'arrivée;

- un prix de seuil de vente est fixé pour ladite période de temps;

- un prix de seuil d'achat est fixé pour ladite période de temps;

- au moins une transaction de négoce d'électricité est conclue pour ladite période de temps, ladite transaction de négoce d'électricité comprenant une valeur de base, une quantité de base, un prix de base, une date à laquelle ou jusqu'à laquelle ladite transaction de négoce d'électricité doit être exercée, et l'obligation d'une exécution physique pendant ladite période de temps;

- ladite valeur de base comprend une puissance d'appel positive ou négative ;

- ladite date est ledit moment de début;

- ladite exécution physique comprend que ladite valeur de base soit livrée à hauteur de ladite quantité de base;

- dans le cas de ladite puissance d'appel positive,

$$ALp \leq Fo \text{ et } BPp \geq Pv$$

s'appliquent, où ALp est ladite quantité de base de puissance d'appel positive, Fo est ladite flexibilité à la hausse, BPp est ledit prix de base de ladite puissance d'appel positive, et Pv est ledit prix de seuil de vente;

- dans le cas de ladite puissance d'appel négative

$$ALn \leq Fu \text{ et } BPn \leq Pe$$

s'appliquent, où ALn est ladite quantité de base de puissance d'appel négative, Fu est ladite flexibilité à la baisse, BPn est ledit prix de base de ladite puissance d'appel négative, et Pv est ledit prix de seuil de d'achat;

- à ladite date ou jusqu'à ladite date, ladite installation (11) est commandée de telle manière que ladite installation (11) fournit pendant ladite période de temps ladite valeur de base à hauteur de ladite quantité de base.

2. Procédé selon la revendication 1, dans lequel la fixation d'une flexibilité à la hausse et/ou la fixation d'une flexibilité à la baisse et/ou la fixation d'un prix de seuil de vente et/ou la fixation d'un prix de seuil d'achat comprend l'évaluation de données historiques, de données planifiées et/ou de données en temps réel.

3. Procédé selon la revendication 2, dans lequel lesdites données en temps réel sont obtenues au moins en partie à l'aide d'au moins un capteur (13q, 13s).

4. Procédé selon une ou plusieurs des revendications précédentes, dans lequel

- une disponibilité de ladite installation (11) est déterminée;
- si ladite disponibilité déterminée n'a pas la valeur "disponible" ou a la valeur "non disponible", ladite transaction de négoce d'électricité conclue est résiliée ou annulée ou compensée.

5. Procédé selon la revendication 4, dans lequel ladite annulation ou ladite compensation de ladite transaction de négoce d'électricité conclue est effectuée à l'aide d'au moins une transaction de négoce d'électricité de sens contraire.

6. Procédé selon la revendication 5, dans lequel ladite opération de négoce d'électricité de sens contraire est conclue de manière analogue à ladite conclusion de ladite transaction de négoce d'électricité conclue.

7. Procédé selon l'une ou plusieurs des revendications précédentes, dans lequel ladite commande et/ou ladite détermination d'une disponibilité est effectuée à l'aide d'au moins un boîtier de télécommande (15).

8. Procédé selon la revendication 7, dans lequel la définition de ladite période de temps et/ou la définition dudit moment de début et/ou ladite fixation d'une flexibilité à la hausse et/ou ladite fixation d'une flexibilité à la baisse et/ou ladite fixation d'un prix de seuil de vente et/ou ladite fixation d'un prix de seuil d'achat et/ou ladite conclusion d'une transaction de négoce d'électricité et/ou ladite commande et/ou ladite détermination d'une disponibilité et/ou la résiliation ou l'annulation ou la compensation de ladite transaction de négoce d'électricité conclue est effectuée à l'aide d'au moins un dispositif de commande (16).

9. Procédé selon la revendication 8, dans lequel ladite conclusion d'une transaction de négoce d'électricité et/ou ladite résiliation ou ladite annulation ou ladite compensation de ladite transaction de négoce d'électricité conclue s'effectue à l'aide d'au moins une bourse d'électricité (19).

10. Procédé selon l'une ou plusieurs des revendications précédentes, dans lequel ladite fixation d'une flexibilité à la hausse et/ou ladite fixation d'une flexibilité à la baisse et/ou ladite fixation d'un prix de seuil de vente et/ou ladite fixation d'une prix seuil d'achat et/ou ladite conclusion d'une transaction de négoce d'électricité et/ou ladite commande et/ou ladite détermination d'une disponibilité et/ou la résiliation ou l'annulation ou la compensation de ladite transaction de négoce d'électricité conclue s'effectue à l'aide d'au moins un réseau neuronal artificiel (17).

11. Procédé selon une ou plusieurs des revendications précédentes, dans lequel des données historiques, des données planifiées et/ou des données en temps réel sont stockées dans au moins une base de données (18).

12. Système (10) de commande d'au moins une installation électrique (11), ladite installation (11) comprenant au moins une source d'énergie électrique (11q) et/ou au moins un puits d'énergie électrique (11s) et étant couplé à un réseau électrique (12) et ledit système (10) peut être couplé à ladite installation (11) et est conçu pour exécuter un procédé dans lequel

- ne période de temps future est définie avec une moment de début et une durée;
- une flexibilité à la hausse est fixée pour ladite période de temps, ladite flexibilité à la hausse étant une augmentation maximale prévisionnelle de la puissance d'arrivée et/ou une baisse maximale prévisionnelle de la puissance de départ;
- une flexibilité à la baisse est fixée pour ladite période de temps, ladite flexibilité à la baisse étant une augmentation maximale prévisionnelle de la puissance de départ et/ou une baisse maximale prévisionnelle de la puissance d'arrivée;
- un prix de seuil de vente est fixé pour ladite période de temps;
- un prix de seuil d'achat est fixé pour ladite période de temps;
- au moins une transaction de négoce d'électricité est conclue pour ladite période de temps, ladite transaction de négoce d'électricité comprenant une valeur de base, une quantité de base, un prix de base, une date à laquelle ou jusqu'à laquelle ladite transaction de négoce d'électricité doit être exercée, et l'obligation d'une exécution physique pendant ladite période de temps;
- ladite valeur de base comprend une puissance d'appel positive ou négative ;
- ladite date est le moment de début;
- ladite exécution physique comprend que ladite valeur de base soit livrée à hauteur de ladite quantité de base;
- dans le cas de ladite puissance d'appel positive,

$$ALp \leq Fo \text{ et } BPp \geq Pv$$

s'appliquent, où ALp est ladite quantité de base de puissance d'appel positive, Fo est ladite flexibilité à la hausse, BPp est ledit prix de base de ladite puissance d'appel positive, et Pv est ledit prix de seuil de vente ;
- dans le cas de ladite puissance d'appel négative

$$ALn \leq Fu \text{ et } BPn \leq Pe$$

s'appliquent, où ALn est ladite quantité de base de puissance d'appel négative, Fu est ladite flexibilité à la baisse, BPn est ledit prix de base de ladite puissance d'appel négative, et Pv est ledit prix de seuil de d'achat ;
- à ladite date ou jusqu'à ladite date, ladite installation (11) est commandée de telle manière que ladite installation (11) fournit pendant ladite période de temps ladite valeur de base à hauteur de ladite quantité de base.

13. Système (10) selon la revendication 12, comprenant au moins un capteur (13q, 13s) qui peut être couplé à ladite installation (11) et qui est conçu de telle manière que ladite détermination d'au moins une partie desdites données en temps réel peut être effectuée à l'aide du capteur (13q, 13s).

14. Système (10) selon la revendication 12 ou 13, comprenant au moins un boîtier de télécommande (15) couplé à l'installation (11) et conçu de telle manière que ledit boîtier de télécommande (15) puisse effectuer ladite commande et/ou ladite détermination d'une disponibilité.

15. Système (10) selon l'une ou plusieurs des revendications 12 à 14, comprenant au moins un dispositif de commande (16) qui est couplé à ladite installation (11) et qui est conçu de telle manière que ledit dispositif de commande (16) peut effectuer ladite définition de ladite période de temps et/ou ladite définition dudit moment de début et/ou la fixation d'une flexibilité à la hausse et/ou la fixation d'une flexibilité à la baisse et/ou ladite fixation d'un prix de seuil de vente et/ou ladite fixation d'un prix de seuil d'achat et/ou ladite conclusion d'une transaction de négoce d'électricité et/ou ladite commande et/ou ladite détermination d'une disponibilité et/ou la résiliation ou l'annulation ou la compensation de ladite transaction de négoce d'électricité conclue.

16. Système (10) selon l'une ou plusieurs des revendications 12 à 15, dans lequel au moins une bourse d'électricité (19) peut être couplée audit système (10) et est conçue de telle manière que ladite bourse d'électricité (19) puisse effectuer ladite conclusion d'une transaction de négoce d'électricité et/ou ladite résiliation ou ladite annulation ou ladite compensation de la transaction de négoce d'électricité.

17. Système (10) selon la revendication 16, comprenant ladite bourse d'électricité (19).

18. Système (10) selon l'une ou plusieurs des revendications 12 à 17, comprenant au moins un réseau neuronal artificiel (17) qui est conçu de telle manière que ledit réseau neuronal artificiel (17) puisse effectuer ladite fixation d'une flexibilité à la hausse et/ou ladite fixation d'une flexibilité à la baisse et/ou ladite fixation d'un prix de seuil de vente et/ou ladite fixation d'un prix de seuil d'achat et/ou ladite conclusion d'une transaction de négoce d'électricité et/ou ladite commande et/ou ladite détermination d'une disponibilité et/ou la résiliation ou l'annulation ou la compensation de ladite transaction de négoce d'électricité conclue.

19. Système (10) selon une ou plusieurs des revendications 12 à 18, comprenant au moins une base de données (18) dans laquelle sont stockées des données historiques, des données planifiées et/ou des données en temps réel.

# FIG. 1

# FIG. 2

```
┌─────────────┐
│     100     │
└─────────────┘
       │
       ▼
┌─────────────┐
│     101     │
└─────────────┘
       │
       ▼
┌─────────────┐
│     102     │
└─────────────┘
       │
       ▼
┌─────────────┐
│     103     │
└─────────────┘
       │
       ▼
┌─────────────┐
│     104     │
└─────────────┘
       │
       ▼
┌─────────────┐
│     105     │
└─────────────┘
       │
       ▼
┌─────────────┐
│     106     │
└─────────────┘
```

# FIG. 3

```
┌─────────────┐
│     100     │
└─────────────┘
       │
       ▼
┌─────────────┐
│     101     │
└─────────────┘
       │
       ▼
┌─────────────┐
│     102     │
└─────────────┘
       │
       ▼
┌─────────────┐
│     103     │
└─────────────┘
       │
       ▼
┌─────────────┐
│     104     │
└─────────────┘
       │
       ▼
┌─────────────┐
│     105     │
└─────────────┘
       │
       ▼
┌─────────────┐
│     107     │
└─────────────┘
       │
       ▼
      ◇ 108 ◇ ──────▶ ┌─────────────┐
       │               │     109     │
       ▼               └─────────────┘
┌─────────────┐
│     106     │
└─────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016118115 A1
- US 20190252880 A1
- US 20190369572 A1